# EUROPEAN PATENT APPLICATION

(11) **EP 0 560 720 A2**
(43) Date of publication of application: **15.09.1993**
(21) Application number: 93810156.5
(22) Date of filing: 03.03.1993
(51) Int. Cl.: B01D 63/04, B01D 63/02

(54) **Cartridge of hollow fiber membrane wafers and module containing stacked cartridges**

(30) Priority: 04.03.1992 US 845641; 18.12.1992 US 992560
(71) Applicant: ZENON ENVIRONMENTAL INC., Burlington, Ontario L7N 3P3 (CA)
(72) Inventor: Pedersen, Steven Kristian, Burlington, Ontario L7N 3E2 (CA); Lipski, Christopher John, Burlington, Ontario L8S 2C6 (CA); Cote, Pierre Lucian, Hamilton, Ontario L8P 3W5 (CA)
(74) Representative: Cronin, Brian Harold John

(57) **Abstract**

A tubular module is disclosed for use as a membrane device, comprising, a shell with fluid couplings removably affixed to each of its ends and at least one non-disassemblable cartridge operably held within the shell. The cartridge is constructed from plural wafers sequentially coaxially aligned, each wafer consisting essentially of a generally planar frame and an array of hollow fibers of selectively permeable material adhesively held by their ends in opposed portions of the border of the frame, without potting the ends. Several cartridges may be coaxially "ganged" to provide a "stack" with the required filtration area. The cartridges may be removably disposed in the shell, or secured therein so that the entire module may be discarded when its efficiency is unacceptably low. The wafers are adhesively secured to define a fluid-tight conduit with open ends through which a feedstream is flowed transversely over the fibers. The bores of the fibers are in open fluid communication with the permeate zone in the shell. A frame of a wafer may be provided with longitudinal, laterally spaced apart grooves in its upper surface and the fibers trained in the grooves. A cartridge may be made by precoating a first frame with adhesive, embedding the fibers in the adhesive, initially curing the adhesive and then placing a second frame over the partially cured adhesive ; and, repeating the steps. Alternatively, the second frame may be positioned over the embedded fibers on the first frame and the adhesive then cured. The arrays lie in a plane substantially orthogonal to the direction of flow of a feedstream to be treated, and fibers of one array are staggered relative to those in a successive array.

## Description

### BACKGROUND OF THE INVENTION

Many framed hollow fiber membranes (referred to as "fibers" for brevity) are assembled in spaced-apart relationship in an "array" to form a "wafer". Plural wafers are assembled to form a module. The term "fiber" is used to refer to both organic polymeric membranes and to ceramic/metallic (ceramic, or metallic, or both) membranes, except when the latter is specifically referred to, they are referred to as "hollow membranes". Awafer is not a "cell" since an individual wafer has no meaningful existence unless used to form a cartridge. A "wafer" is an array of a single layer of laterally spaced-apart fibers secured in a frame bounded by a continuous, imperforate or perforate border.

The prior art has made wafers but have sacrificed good exposure of the fibers for packing density by making wafers with bundles of fibers which are in contact with one another to a greater or lesser degree in some wafers compared to others; and, have made wafers with fluid passages in the sides of their frames. Fibers in contact with each other not only decrease the effective area of a module of multiple wafers, but exhibit a proclivity to chafe against each other, thus damaging the walls of contacting fibers.

This invention is specifically directed to:
(1) a cartridge formed by repetitively adding repeating units, each unit consisting essentially of a unitary frame of arbitrary shape, and an array of fibers; optionally, the borders of the frame may be slotted to provide post-potting for additional security against leakage around the fibers; and,
(2) to a module containing a stack of cartridges. By a "unitary frame" we refer to one in which the border is continuous so that the frame is a single piece construction. Such a border may have slots in it, through which slots a curable resin may be flowed to post-pot the terminal end portions of fibers in spaced-apart relation on the border.

"Cartridge" refers to an assembly of "wafers" which assembly is constructed by sequentially assembling frames and monolayer arrays. A cartridge may be used with other cartridges to form a "stack" of cartridges in a module. If a cartridge is to be disassembled, appropriate gasket means are used between successive cartridges. A serviceable cartridge is expected to provide "zero defect" service over its expected life time.

The wafers can perform their function only when stacked to form a cartridge. Unlike in the prior art, an assembly of stacked wafers cannot be used until the uppermost array of fibers is covered with an end cap. In other words, the minimum "unit" of this invention is neither a cell nor a wafer but a cartridge.

A cartridge of unitary wafers was never successfully constructed prior to this time for a number of interrelated reasons, one of which was the high risk of not making a leak-proof cartridge; another was a preoccupation with the ability to replace a defective cell when necessary. Not the least of the many reasons was that it was not evident how a reliable and economical cartridge could be constructed with simplicity. Moreover, there is no intimation in the prior art of the far-reaching benefits of constructing a cartridge directly, without first constructing a single cell.

Conceptually, the effort in the art has been directed towards providing a single cell, then coaxially assembling plural cells, because it was logical to construct a single cell. A single cell can be handled and checked before being assembled in a module, thus minimizing error with a step-by-step approach. But a different approach, namely, a concept directed to constructing a reliable and rugged cartridge without making individual cells, led to a solution of the problems in the prior art, namely providing a module with high efficiency and reliability at an affordable cost.

Fibers are not tied together, nor do they overlap as in a mesh, because this results in chafing at the "ties" and premature rupture of the chafed fiber; and, in entrapment of solids in a "cage" formed by an axial zone between tied fibers.

By "axial" we refer to the central axis of a module, along which axis a multiplicity of arrays of fibers are assembled. For convenience and ease of reference in most of the drawings, the central axis is referred to as being in the vertical direction unless otherwise stated. Each array of fibers is referred to as being in the lateral plane, one axis of which is referred to as horizontal, and a direction at an angle to the horizontal in the lateral plane is referred to as being transverse.

A cartridge is constructed with coaxially aligned wafers in fluid-tight relationship near the peripheries of their frames, each wafer carrying but a single row ("monolayer") of parallel spaced apart fibers without potting their ends. Yet each monolayer of fibers is in fluid-tight, spaced-apart relationship near their terminal portions, in opposed portions of the border of a frame having a central or off-set through-passage ("feed channel") for carrying a feedstream to be treated. The problem of confining those terminal portions in lateral, spaced-apart relationship on the borders of frames, with or without post-potting, had never been addressed in the prior art.

A cartridge with "zero defect" service is preferably made with a continuous, perforate or "slotted" border. A "slotted wafer" has at least two opposed elongate through-passages or "slots" within opposed portions of the border. Opposed terminal end portions of the fibers are held in the opposed, "slotted" border portions. The cartridge comprises at least three, typically from 10 to 200, that is, a multiplicity of unitary wafers assembled with one bonded in contact with another.

All "slotted wafers" are wafers, but not all "wafers" are slotted wafers. The vertically aligned slots of successive slotted wafers, the ends of which slots are in open fluid communication with each other in a cartridge of wafers, are potted after the cartridge is constructed. The vertically aligned ends of successive slots, and the slots themselves, together function as an annular "potting channel". Because the potting channel is filled with resin after the cartridge is assembled, the cartridge is referred to as being "post-potted". When post-potted, a fluid-impermeable continuous annular shell of potting resin is formed within the cartridge, the annular shell surrounding the fibers.

Strand, in U.S. Patent No. 3,342,729 had to use a mesh of fibers which he sandwiched between two extruded or cast frame members, formed from a suitable thermoplastic polymeric material. The reason he was forced to use a mesh was because such a configuration of meshed fibers had inherent stability. A multiplicity of individual, loose fibers do not have such stability. The stability afforded by the mesh is sufficient to allow the fibers (as a mesh) to be handled and positioned between the frame members. Strand did not suggest positioning individual fibers, in side-by-side relationship between the frame members nor could he have done so without envisioning the possibility of providing an essentially planar array of individual spaced-apart fibers between frame members. The fibers as a mesh, sandwiched between two frame members, is referred to as a "cell" in Strand's invention.

The function of the slotted through-passages, or elongated perforations, in the sides of the frame was to provide multiple flow-channels for permeate, that is, the sides were "functionally perforate".

The vertical spacing between the frames of essentially contiguous wafers in a cartridge is most preferably, insignificant, being only the thickness of adhesive, if an adhesive is used; and, being none (zero vertical spacing) when the lateral surfaces of frames of a cartridge are solvent-bonded, or bonded with ultrasonic waves, or the like. The fibers of successive wafers are in vertically spaced-apart relationship with each other, the magnitude of the spacing depending upon thickness of a frame and the bonding means used to bond successive arrays in a cartridge.

The significance and importance of securing loose, individual linear fibers in an array of coplanar fibers having generally parallel longitudinal axes, is better appreciated by referring to numerous prior art cells in which this was not done.

Since it was decided not to pot the fibers a fast and effective technique for securing the terminal portions of the fibers was necessary. The terminal portions upon or within the border of the frame position the fibers before they are bonded to the frame, and provide adequate support at the terminal portions so as to maintain the fibers in spaced-apart relationship relative to other fibers.

In a "cartridge" which is constructed by sequentially assembling frames and monolayer arrays, the number of arrays "n" held between successive frames is one less than the number of frames in which the fibers are held, since a cartridge must begin and end with a frame, that is, there are "n + 1" frames; where n represents an integer 2 or greater, preferably in the range from 6 to 100.

Flow through a cartridge is described for "outside-in" flow of feed. The module containing a cartridge, or a stack of cartridges, may be equally well adapted for "inside-out" flow, if desired. In "outside-in" flow, feed flows through the central feed channel and a portion of the feed separates in the lumens of the fibers as permeate. "Inside-out" flow is when the feed flows through the lumens of the fibers and the permeate is collected outside the membranes.

### SUMMARY OF THE INVENTION

A "cartridge" is made comprising plural wafers, one upon another, each wafer comprising a single row of unpotted, coplanarly spaced-apart individual hollow fibers ("monolayer array") adhesively secured in the border of a unitary frame having a single through-passage ("feed channel") for fluid. This construction avoids the problems of the prior art instead of overcoming them.

A cartridge or a stack of cartridges may be removably inserted in the shell of a permeation module; or, a cartridge or stack may be non-removably secured within the shell of a module. If the latter, the module is discarded when the efficiency with which it separates permeate from concentrate, does not justify continued operation with the module.

It is therefore a general object of this invention to provide a cartridge of wafers each comprising a thin, unitary ring frame, preferably less than about five times as thick as the outside diameter of a fiber to be secured therein, having a central feed channel defining a functionally imperforate border of the frame (or "sides", if the frame is polygonal), the frame having a continuous periphery within which a monolayer array of hollow fibers is secured by adhesively bonding terminal portions of the fibers in opposed portions of the border. Opposite border portions of the frame may be slotted to provide a post-potting channel which, when filled with potting resin, ensures that a cartridge with a "near-fluid-tight" feed channel is made fluid-tight. By "near-fluid-tight" is meant that the stack need only contain and hold the potting resin until it cures, and there is space around the fibers, into which space the resin flows. If the bonding of the fibers to the borders in all wafers is fluid-tight under operating conditions, then the "post-potted" cartridge only provides insurance against leakage. Successive arrays are separated by the thickness of a single frame, if the frame is grooved to accept the fibers, or, by the thickness of a frame and a layer of adhesive in which the fibers are bedded before a successive frame is placed thereupon.

It has also been discovered that when a cartridge of wafers constructed as above, with slotted frames, the slots may be so arranged that the slots in one wafer are in open fluid communication with the slots in a contiguous wafer. Such a cartridge may be post-potted, thus ensuring that the fibers in the cartridge are sealed in an annular zone of potting resin. A post-potted cartridge effectively essentially eliminates the problems endemic to the construction of a "zero-tolerance" cartridge, if it does not actually do so.

The opposed portions of the slotted border of a thin, unitary laminar ring frame secure fibers so that they are circumferentially bonded to the border with suitable bonding means so that the circumference of each fiber is at least in "near-fluid-tight" relationship with the through-passage. Plural slotted wafers are stacked to form a cartridge disposed within a shell, with or without using mounting means.

A cartridge or stack with, or without through-passages for tie-rods (to mount the cartridge or stack in position) is operably disposed within a shell. Such "rod through-passages" for mounting a cartridge or stack, if such passages are provided, have no function relating to channeling fluid, or separating any of the fluid's components, and in the module each cartridge is deemed to have non-functional perforations.

It is another general object of this invention to provide a module for use as a membrane device, comprising, a shell having entrance and exit passages, and at least one cartridge disposed within the shell, the cartridge comprising plural repeating units of sequentially constructed wafers; each wafer comprising a monolayer array of multiple, essentially linear hollow fibers of selectively permeable material, which fibers are not interconnected intermediate their terminal portions, but are coplanarly disposed across an axial feed channel and secured in opposed portions of a unitary frame, each frame having a continuous periphery, opposite border portions of which may be slotted to provide an annular post-potting channel; the feed channel is defined by coaxially aligned, abutting frames, each with a continuous, functionally imperforate border within which the fibers are secured, non-displaceably, near their opposite open ends which protrude through opposed portions of the outer periphery of the frame; the arrays being axially spaced apart by about the thickness of a frame; an entrance passage and an exit passage in the shell each communicates with the feed channel; and, the entrance and exit passages are each sealed from the feed channel.

A cartridge is formed without assembling individual 'stand alone' cells, but by constructing a unitary cartridge; each repeating unit is set in place, in fluid-tight, or "near-fluid-tight" relationship relative to the last prior repeating unit, within less than 5 minutes, preferably in < 1 min, most preferably < 20 secs.

It is therefore a general object of this invention to provide a module having a low cost, low pressure shell in which an assembly of coaxial wafers, in series, forms a fluid-tight conduit of sealingly abutted frames having axially aligned through-passages; in a preferred embodiment, to provide a feed which flows over the fibers of the arrays, in transverse flow; to provide a unitary non-disassemblable cartridge in which individual fibers are essentially linear and secured under suitable tension irrespective of their length by opposed portions of the unitary frame, are unsupported within the array except near their ends, and the ratio of outside diameter to length of the fibers is chosen as a function of the hydrodynamics of the feed; and, to provide a cartridge which is post-potted after it is constructed so that one or more arrays are oriented transversely to the fibers in adjacent arrays in the cartridge.

It is a specific object of this invention to provide a simple method for securing plural fibers in a cartridge by bonding an array of fibers with bonding means, preferably a fast-acting synthetic resinous adhesive, in the border of a frame.

Preferably each frame is provided with plural longitudinal, laterally spaced apart grooves therein, one fiber for each groove, and the fibers are held under slight tension in the grooves, with the ends of the fibers overhanging the periphery of the frame. If the open ends of the fiber protrude too far from the outer periphery of the frame and overhang it, they are severed close to the frame.

### BRIEF DESCRIPTION OF THE DRAWINGS

The foregoing and additional objects and advantages of the invention will best be understood by reference to the following detailed description, accompanied with schematic illustrations of preferred embodiments of the invention, in which illustrations for the slotted wafers are designated with a "S" prefix, like reference numerals refer to like elements, and in which:
Figure 1 is a perspective view of a module with portions broken away and exploded, showing more than four cylindrical cartridges stacked coaxially in a cylindrical shell, each cartridge constructed by sequentially forming wafers, each with an annular laminar ring frame ("ring frame" for brevity), with no tie-rod passages in the ring frame for mounting the cartridges; and successive wafers are radially displaced 60° relative to each other.
Figure 2 is a plan view illustrating a repeating unit of the cartridge, namely a wafer having an imperforate ring frame with individual grooves to accommodate each fiber of an array secured across the feed channel defined within the border of the frame.
Figure 2A is an end elevational view of Fig 2, showing that fibers are held in grooves with the upper surfaces of the fibers essentially coplanar with the upper surface of the frame.
Figure S-2 is a plan view wherein the fibers are adhesively secured within a slotted circular ring frame, a detail of which is shown in Fig S-3.
Figure S-2A is an end elevational end view of Fig S-2 showing fibers held in grooves with the upper surfaces of the fibers essentially coplanar with the upper surface of the frame.
Figure S-3 is a plan view illustrating only the slotted ring frame of a repeating unit, the frame having opposed parallel chordal or chord-like individual grooves within its border to accommodate each fiber of an array to be secured across opposed, arcing border slots, and across the feed channel defined within the border of the frame.
Figure S-3A is an end elevational end view of Fig S-3 showing the ends of grooves in the border of the ring frame.
Figure S-4 is a plan view wherein the fibers are adhesively secured within a slotted square (or rectangular) wafer having a ring frame (also referred to as a "ring frame", though it is square), with parallel opposed potting slots in opposed borders, and individual parallel grooves aligned in opposed borders to accommodate each fiber of an array to be secured across the feed channel defined within the border of the frame. The frame has mounting holes shown in phantom outline, because the cartridge is located and held within the shell of the module with internal spacers.
Figure S-4A is an end elevational end view of Fig S-4 showing that the fibers are snugly held, preferably adhesively secured, in the aligned grooves with the upper surfaces of the fibers essentially coplanar with the upper surface of the rectangular frame.

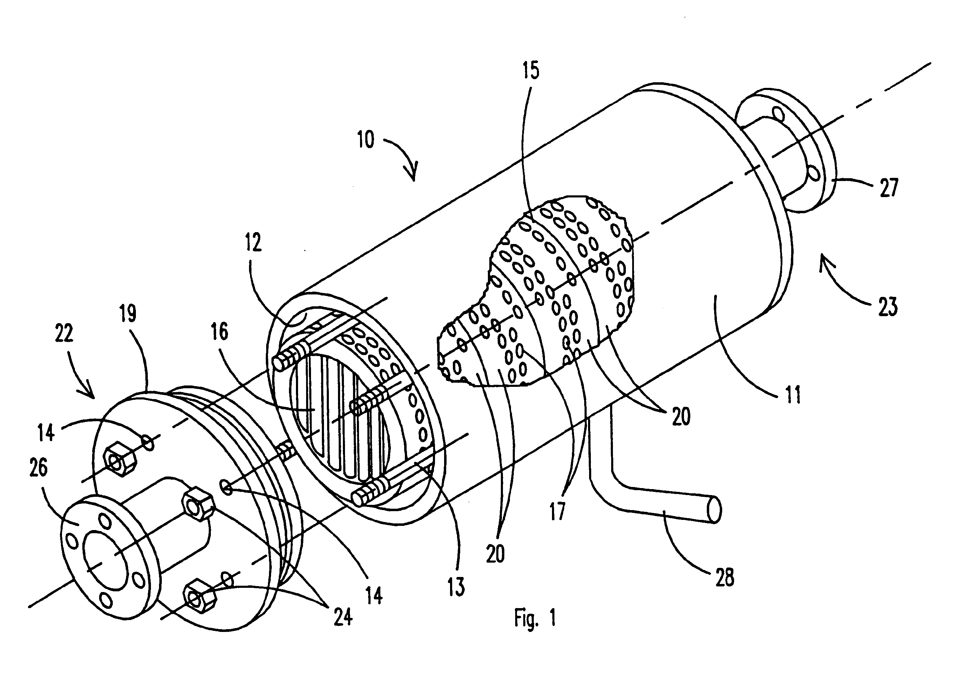

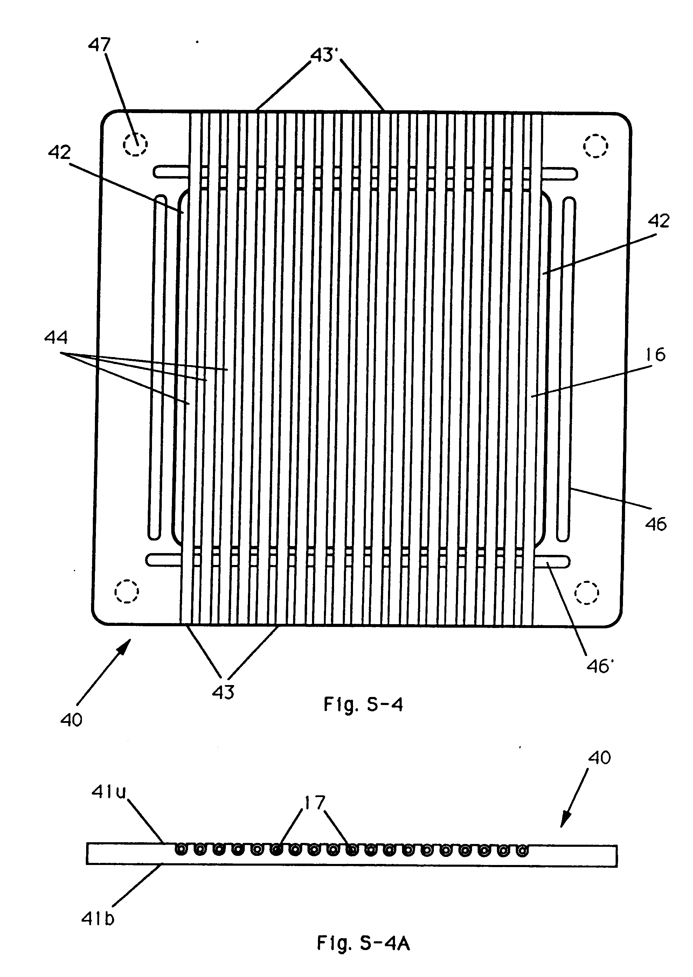

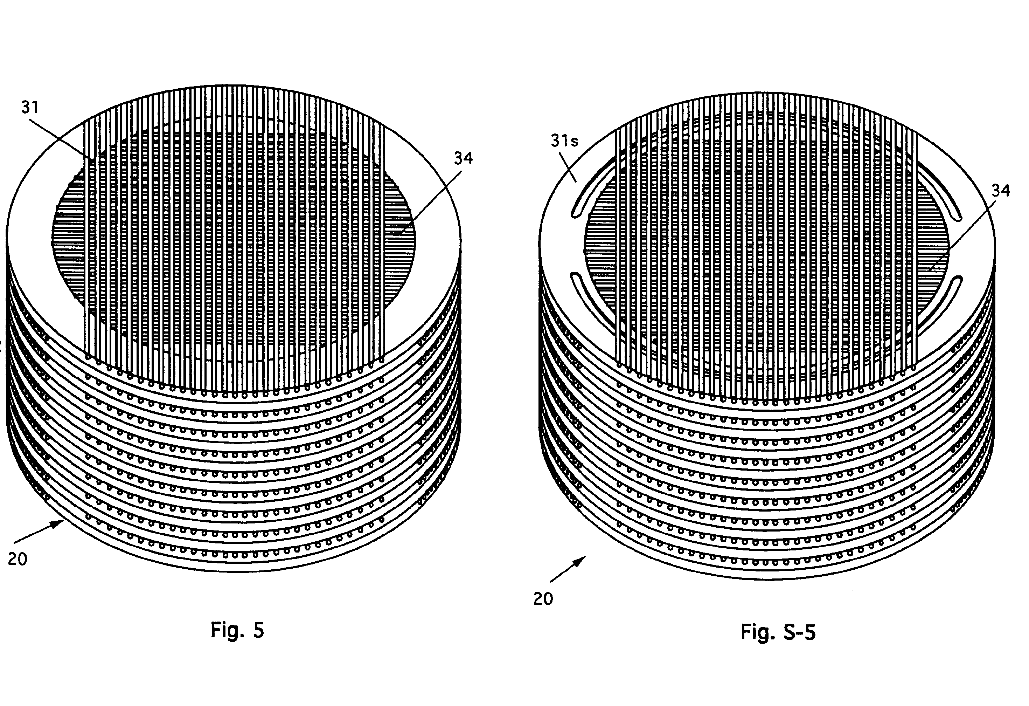

Figure 5 is a perspective view of a cylindrical cartridge from Fig 1 as the cartridge is being constructed, but without the last, uppermost end-frame which is to overlie the uppermost array; the fibers in one array are shown 90° radially displaced relative to those in an adjacent array.
Figure S-5 is a perspective view, also of a cylindrical cartridge, but this one is constructed with slotted ring frames, each slot arcing over slightly more than a quadrant of a circle through the circumferential center line of the slots.

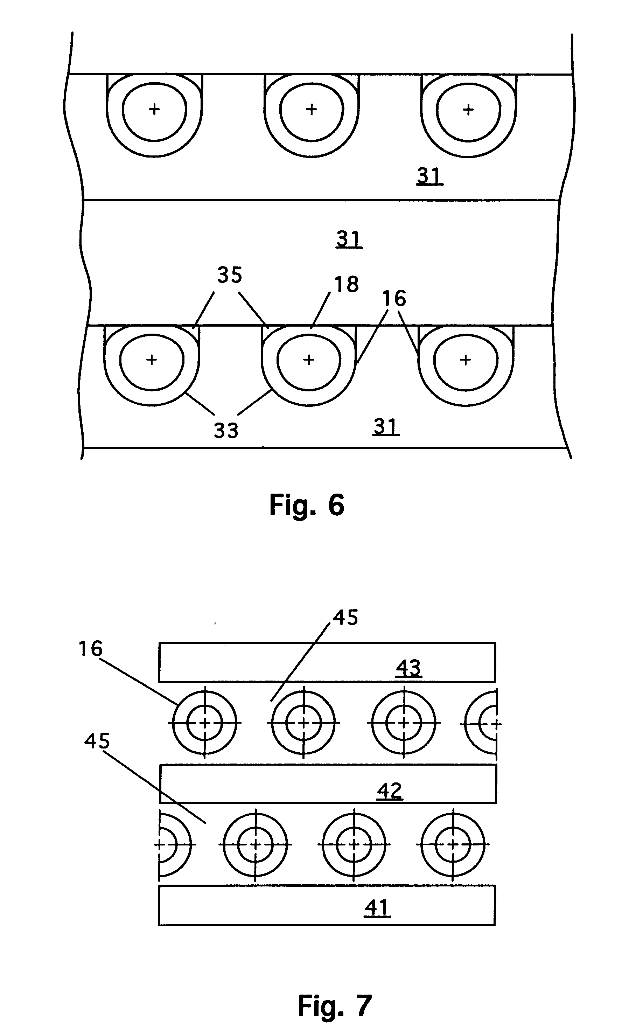

Figure 6 is a detailed elevational view much enlarged, of a portion of the circumferential surface of the cartridge shown in Fig 5 or Fig S-5A.
Figure 7 is a detailed elevational view much enlarged, of a portion of the circumferential surface of a cartridge constructed with ungrooved upper and lower surfaces, showing they are adhesively bonded with a pre- laid layer of adhesive about as thick as, or thicker than the diameter of a fiber; the fibers in successive arrays are staggered laterally relative to one and another so that the fibers from one array are not directly above those in a successive array.
Figure S-8 is a perspective view of a cartridge of square slotted wafers bonded one upon the other, with the topmost wafer, immediately below the uppermost end frame, exploded away from the cartridge (the bottom plate is not shown).
Figure S-9 is a perspective view of the cartridge of square slotted wafers with its uppermost cover plate, and its bottom plate, both of which plates are used to contain potting resin before it fills the slots; the cartridge has corner mounting through-passages for rods extending from the uppermost cover plate, through all wafers of a cartridge, and through the bottom plate.

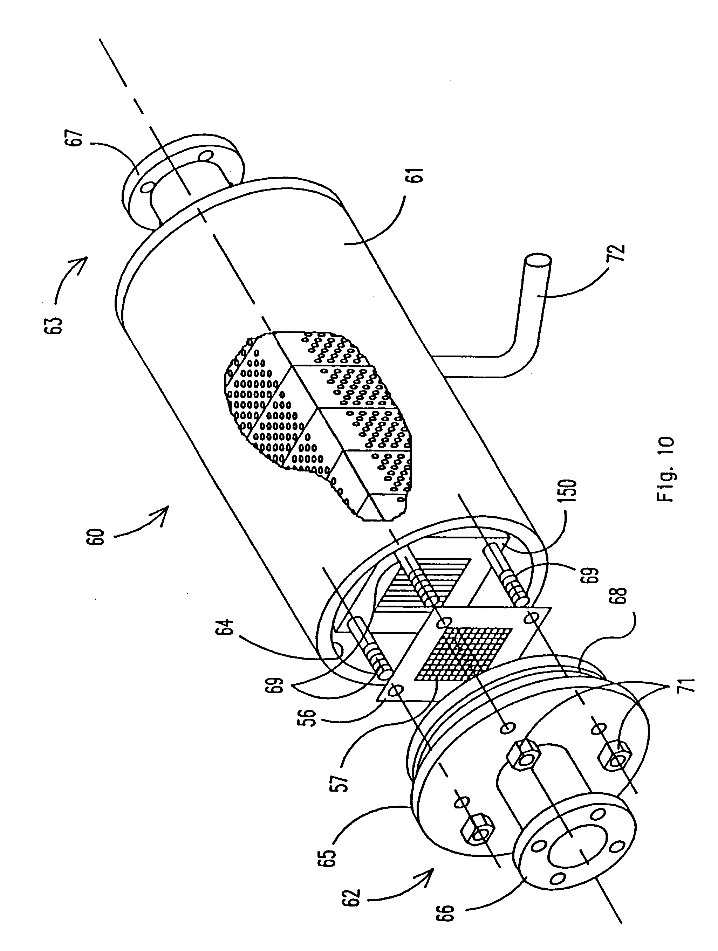

Figure 10 is a perspective view of a module with portions broken away and exploded, showing more than four (4) square cartridges stacked coaxially in a cylindrical shell, each cartridge having through-bores for positioning it in the shell; each cartridge is constructed by sequentially forming wafers, each with an annular laminar square ring frame with tie-rod passages in the ring frame for mounting the cartridges; and fibers in successive wafers in each cartridge are radially displaced 90° relative to each other.

### DETAILED DESCRIPTION OF PREFERRED EMBODIMENTS

An "array" is formed with a multiplicity of substantially linear hollow fibers, individually secured in laterally spaced-apart coplanar relationship on the border, without stabilizing the fibers by interconnecting them to one another. The thickness of a laminar frame is typically in the range from at least 0.5 times, up to about 5 times the outside diameter of a hollow fiber to be secured therein, and the fibers are circumferentially bonded to the border of the ring frame with enough bonding agent suitable for the purpose, so that not only is the circumference of each fiber in fluid-tight relationship with the frame on which it rests, but each frame bonds the next successive frame forming the feed channel.

The module of this invention may be used in a fluid-fluid fractionation process of choice, and more generally, in various separation processes. The module is especially well adapted for use in ultrafiltration, reverse osmosis, and gas permeation processes; it may be used for dialysis, especially as an artificial kidney, for direct osmosis, gas-gas exchanges and liquid-gas exchanges such as pervaporation.

The cartridge may be tailored to provide a predetermined pressure drop of feed; and, the bores of fibers in the arrays may be tailored to provide a predetermined resistance in the flow path of permeate.

The frames of each cartridge are preferably of identical dimensions and may be constructed of any material which is bondable to the fibers and is non-reactive with the components of the feed. The side of a frame, in elevational cross section in a plane perpendicular to the plane of the frame's upper surface, may be of arbitrary shape, but is preferably rectangular; and in plan view, the periphery of a frame may be of arbitrary shape (e.g. arcuate or linear) but is preferably circular or square; but each of plural frames is of identical shape so as to form, when assembled with other wafers, a cartridge which is preferably either cylindrical or parallelepiped.

When a stack of cartridges is to be enclosed in the shell of a module, the stack is positioned in the shell, longitudinally, coaxially between fluid-tight gaskets between cartridges. The stack is preferably held in the shell with tie-rod mounting means which traverse the axial length of the assembly. When plural cartridges are mounted in the shell, the longitudinal axis of each cartridge may be horizontally or vertically displaced relative to the longitudinal axis of the shell.

The fibers used in an array may be formed of any conventional membrane material whether inorganic, organic, or, mixed inorganic and organic. Typical inorganic materials include glasses, ceramics, cermets, metals and the like. Ceramic membranes may be made, for example, as described in U.S. Patents Nos. 4,692,354 to Asaeda et al (class 472/ subclass 244), 4,562,021 to Alary et al (class 264/subclass 43), and others. The organic materials are typically polymers, and are preferred, whether isotropic, or anisotropic with a thin layer or "skin" on either the bore side or the shell side of the fibers. Preferred materials for fibers are polysulfones, poly(styrenes), including styrene-containing copolymers such as acrylonitrile-styrene, butadiene-styrene and styrene-vinylbenzylhalide copolymers, polycarbonates, cellulosic polymers, polypropylene, poly(vinyl chloride), poly(ethylene terephthalate), and the like disclosed in U.S. Patent No. 4,230,463 the disclosure of which is incorporated by reference thereto as if fully set forth herein.

The fibers are non-randomly oriented in each array, and in the module, so that the flow of feed through the module is over the fibers and orthogonal thereto so as to be in transverse flow as disclosed in "Designing Hollow Fibre Contactors" by Mung-Chien Yang and E. L. Cussler in AIChE Jour., 32: 1910-1916 (1986).

For hollow organic fiber membranes, the outside diameter of a fiber is at least 100wm (microns) and may be as large as about 3 mm, typically being in the range from about 0.4 mm to 2 mm. Ceramic/metallic tubular membranes have an outside diameter in the range from about 3 mm to about 13 mm. The larger the outside diameter the less desirable the ratio of surface area per unit volume of module. The wall thickness of a polymeric organic fiber is at least 10 my and may be as much as 1 mm, typically being in the range from about 5% to about 40% of the outside diameter of the fiber.

The average pore cross sectional diameter in a fiber may vary widely, being in the range from about 5 to 2000 A. The preferred pore diameter for separation of components in a liquid feedstream is in the range from about 10 to 200 A.

The diameter of a fiber in an array will depend upon the effective inside diameter of the wafer (i.e. length of fiber), strength of the fiber material, the flow rate of feed over the fibers and the pressure of the feed, its temperature, and other considerations. Since the fibers are unsupported by a frame member except near their ends, the fibers are relatively short being in the range from 5 cm to about 0.5 meter.

Referring to Fig 1, there is schematically illustrated a module, in perspective view, with portions broken away, indicated generally by reference numeral 10, received within a relatively close-fitting cylindrical shell 11 to show a stack of cylindrical cartridges 20 coaxially held therewithin by tie-rods 13 having threaded ends. The tie-rods, which are equidistantly spaced along the circumference of the stack, traverse the length of the shell and the cartridges are slidably fitted therein with gaskets 15 between successive cartridges. Each cartridge is made with from 10 to 50 arrays, each array having at least 2, preferably from 15 to 500, fibers 16, the bores 17 of which discharge permeate in a plane orthogonal to the longitudinal axis of the module.

The shell 11 may be formed from a synthetic resinous material adapted to withstand the pressure at which feed is to be treated. The shell has an inner end surface 12, only one end of which is visible, which is preferably smooth. The tie-rods 13 extend from the end of the shell and protrude through a stepped flange 19 of coupling 22 with O-rings (not shown) to seal between the tie-rods and the stepped flanges. The ends of the tie-rods are threaded so as to allow the stepped flange 19 to be through-bolted with nuts 24, tightly compressing the upper and lower faces of every cartridge in the assembly, one against the other, or against a gasket, in fluid-tight relation.

Essentially identical fluid couplings 22 and 23 at the ends of the shell serve to direct the flow of a feedstream over the fibers within the stack. The tie-rods 13 and nuts 24 serve to provide enough pressure on the assembly comprising the shell 11, fluid couplings 22 and 23, and the stack of cartridges 20, to confine the feedstream within the stack. Through-passages 14 are provided in coupling 22 to receive the tie-rods 13.

An O-ring (not shown) provides a fluid-tight seal between the coupling 22, especially the stepped flange 19, and the surface 12 inside the shell 11, to ensure that no portion of the permeate leaks over the exterior of the shell. Another gasket (not shown) provides a seal between the inner face of the coupling and the cartridge at each end of the stack, preventing the feedstream from leaking into the permeate side. The two fluid couplings 22 and 23 are provided with flanges 26 and 27, respectively, for attachment to appropriate fluid conduits which deliverthe untreated feedstream, and lead away the treated feedstream or concentrate. A permeate outlet from the shell is indicated at 28.

The module in the form shown in Fig. 1 is particularly well-adapted for use in a filtration operation. Fluid feed under elevated pressure in the range from about 120 kPa (3 psig) to about 5000 kPa (725 psig), is introduced through coupling 22 to flow transversely over the fibers in the stack. Feed may enter at subatmospheric pressure if the permeate is removed under vacuum. Components of the feed capable of passing through the membranes under the transmembrane pressure differential generated, permeates through the walls of the fibers and into the permeate side of the shell, and leaves through permeate outlet 28, while the remaining components of the feedstream (the concentrate) leave through the coupling 23.

Since the length of fibers in an array is necessarily relatively short because they are unsupported by a frame member except near their ends, one skilled in the art is driven to use as long a fiber as one can. This is particularly true in those instances where the ratio of membrane area to the volume in which they are held (the flow-through zone provided by the conduit within the stack) is to be maximized for minimum cost.

The width of the border of a frame is sufficient to provide adequate support for, and negate damage to, the terminal portions of the fibers when subjected to the force of the incoming feedstream and to meet the structural requirements of the module. Each section may be from about 10 mm to about 50 mm wide; its thickness depends upon the outside diameter of the fibers, and if the frame is to be grooved. Preferably, if ungrooved, from 0.5 to 3 times fiber o.d.; if grooved, from 1.5 to 5 times fiber o.d. Organic fibers are typically made with an outside diameter in the range from about400µm to about 2 mm, and wall thickness ranging from about 5 microns to about 2 mm; these dimensions are larger for ceramic fibers.

The void space within a stack may range from about 20% to about 95% of the internal volume of the central conduit through the stack, the void space depending upon the particular end use of the stack in a module. The packing density in a module is defined by membrane area per unit internal volume of module and has dimensions of inverse meter (m-¹).

In a module containing X cartridges each with Y wafers, with fibers of different outside diameter (o.d.) at different center-to-center lateral spacing but the same center-to-center transverse spacing, the packing density in a module varies as illustrated in the following examples. In each case, each wafer has an array of 72 fibers, has an o.d. of 188 mm, an inside diameter (i.d.) of 155 mm, and a center-to-center transverse spacing of fibers of 2 mm.

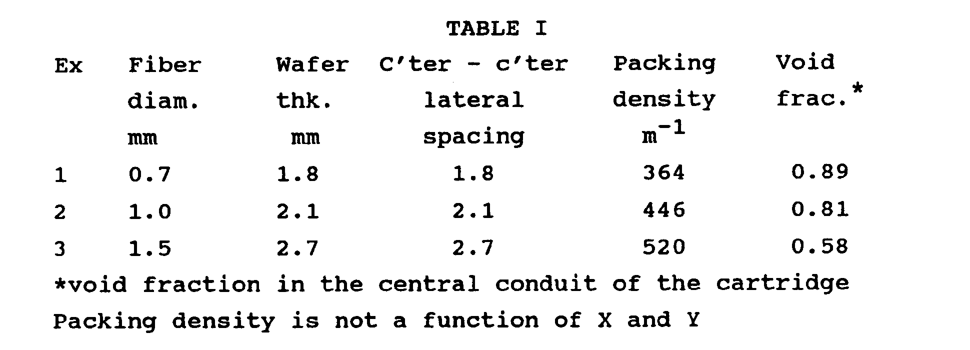

In an array, the center-to-center spacing of fibers in the horizontal plane ranges from about 1.2 to about 5 times the outside diameter of a fiber. The void fraction in the central conduit of the cartridge will vary in the range from about 0.3 to about 0.9, typically in the range from 0.4 to 0.8. The choice of fiber spacing and thickness of frame will determine packing density of the fibers. Such density is chosen to provide the maximum membrane area per unit volume of module without adversely affecting the flow of the feedstream through the stack. The result of forming a stack of cartridges and feeding the feed across the fibers is that permeate is discharged in opposite directions from the bores of fibers while the concentrate is discharged longitudinally through the module.

The length of the terminal portion of a fiber held in the frame's border will typically range from about 0.5 cm to about 5 cm, preferably from about 1 cm to about 2.5 cm, depending upon the diameter and length of the fiber between opposed portions of the border, inter alia. A fiber 0.7 mm in diam. and 10 cm long may be held by terminal portions 1 cm long near each end. A fiber of the same diameter and 50 cm long may be held by terminal portions 2.5 cm long near each end, or by only 1 cm. From about 5% to about 50% of the overall length of a fiber may be used to secure the fiber, chord-wise, in each opposed portion of a border of a frame.

It will now be evident that a stack of cartridges, bonded or gasketed one to another, seriatim, form an elongated conduit having a wall thickness which is determined by the width of the border of the frames and not the thickness of a frame. Such a frame, though relatively thin, is rigid in that, when on edge, it can only be bent around an axis which lies in the plane of the frame. The conduit is therefore able to withstand high hydraulic pressure exerted by the feed.

Unless a module is constructed with a stack in which the fibers of at least some arrays are deliberately always in contact with fibers in a next-adjacent array, fibers in successive arrays are preferably essentially free from contact, not only with one another in the same array, but with fibers in an adjacent array. In a preferred embodiment, it is only during a module's operation, under flow conditions which cause the fibers to sag, that there may be contact between fibers in adjacent arrays, which thus support each other.

The particular method of bonding the fibers to the frame is not narrowly critical, the choice being dependent upon the materials of the frame and the fiber, and the cost of bonding. Use of a compatible adhesive mainly ensures that the mechanical grip exerted by opposed grooves around a fiber, is fluid-tight.

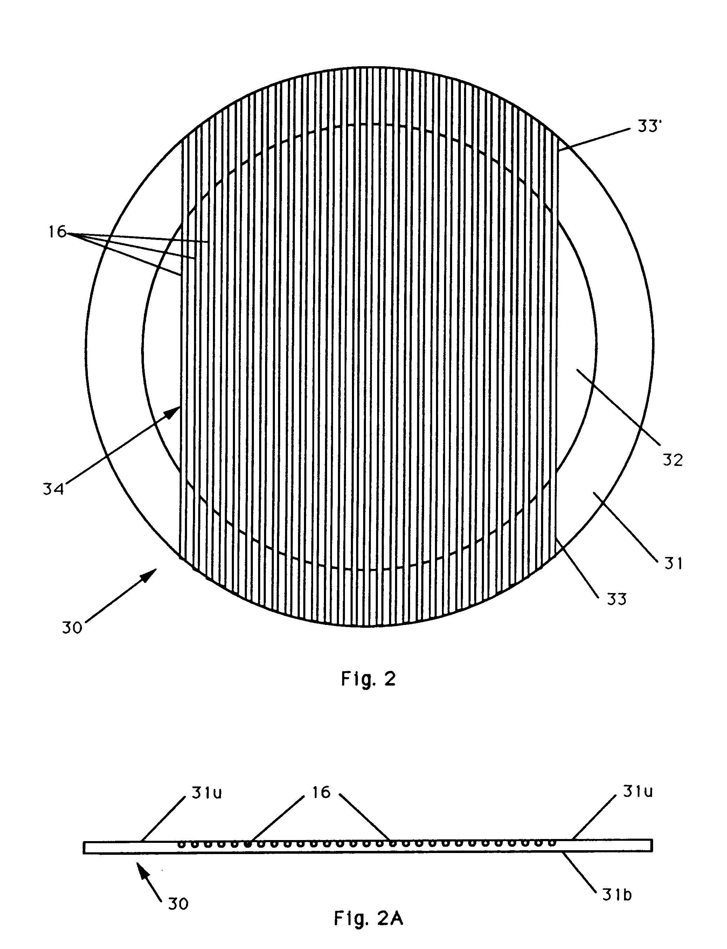

Referring to Figs. 2 and S-2, there are shown wafers indicated generally by reference numeral 30, each having an annular frame in the form of laminar circular rings 31 and 31 S which border a through-passage 32. The rings are provided with directly aligned opposed sets of half-pipe grooves 33 and 33' in the rings' upper surfaces 31 u (see Fig S-3) the grooves being chord segments adapted (see Figs 2 and S-2) to snugly accommodate an array 34 of a multiplicity of fibers 16 which are coplanarly disposed in laterally spaced apart relationship in the sets of grooves 33 and 33' in the upper surface 31 u. The ends of the fibers protrude through opposed points in the periphery of the opposed portions of the border, to allow the bores 17 (Fig S2-A) to discharge permeate.

The lower (or bottom) surface 31 b of each ring is ungrooved. The depth of each groove is preferably about the outside diameter of a fiber so that the upper surface of the fiber is substantially coplanar with the upper surface 31 u. The depth is not narrowly critical; it can be less than the diameter of the fibers since the fibers are compressible; or it can be more than the diameter of the fibers since a thin layer (<1 mm) of adhesive will fill the space above the fibers.

To place the fibers 16 in the grooves 33 and 33' of the rings 31 and 31 S the fibers are held by their ends in a clamping means which is preferably grooved with corresponding grooves to facilitate positioning the fibers in the upper surface 31 u. The upper surface 31 u is pre-coated with a quick-curing adhesive (not shown) before the fibers are placed in the chord-wise grooves, and when the fibers are placed in the grooves, they are coated with more adhesive. The adhesive is chosen to cure initially to a semi-rigid, compressible mass sufficiently rigid to hold the fibers in their grooves until the next ring is positioned. Such initial cure is preferably effected within less than 1 min, preferably < 10 secs, and typically essentially instantaneously in < 1 sec, by a fast-acting initiator which generates free radicals, such as exposure to a source of ultraviolet (UV) tight of sufficient intensity to cure the adhesive and secure the fibers in their respective chordwise grooves.

The clamping means are then released, and another ring 31 (or 31 S to make a slotted cartridge) is placed over the just-adhesively secured fibers, and the step of positioning another array of fibers is repeated.

As illustrated in Figs S-3 and S-3A, the ring 31 S is pre-formed, preferably by injection molding, with the slots 36 and 36' and the grooves 33 and 33' precisely positioned in the ring 31S, so that, when vertically assembled, one directly upon the other, though radially displaced, a portion of every slot in each half-section of ring is in open communication with a portion of a slot directly above it, and also with a portion of a slot directly beneath it, except of course, the bottommost and uppermost rings (end frames). The purpose of such communication is to permit resin injected into either the first or the last slot, to fill every slot in the cartridge, as will be explained in greater detail herebelow.

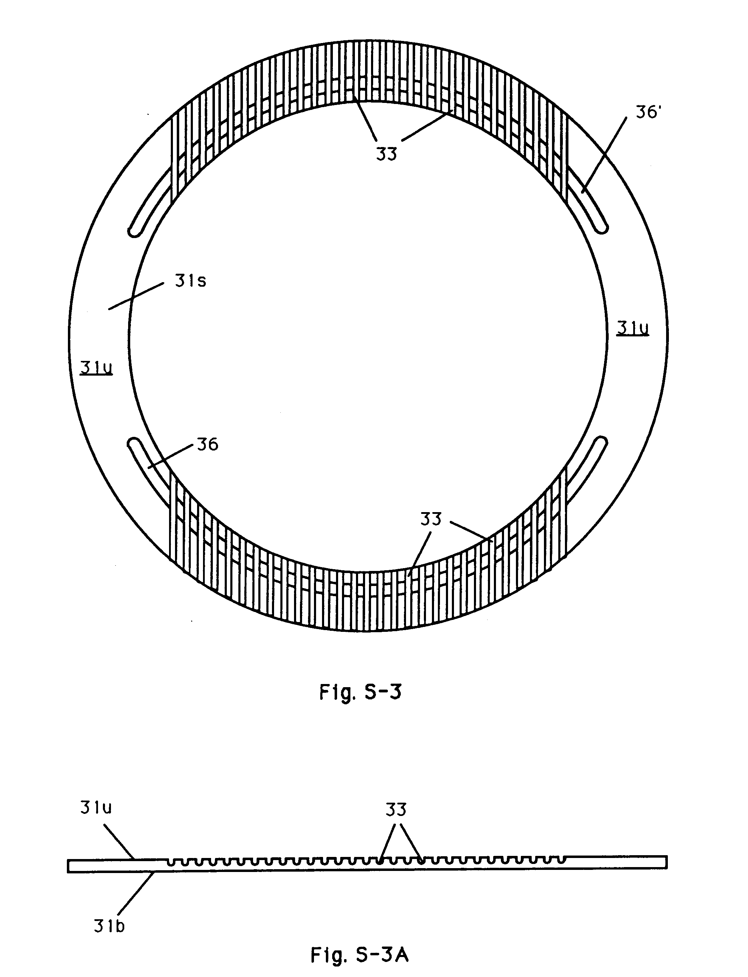

Referring to Figs S-4 and S-4A, there is shown a wafer indicated generally by reference numeral 40, having an annular laminar frame in the form of a square ring frame 41 which borders (frames) a through-passage 42. As in Figs S-2 and S-2A the ring is provided grooves 43 and 43' in the ring's upper surface 41 u (see Fig 4A) snugly to accommodate individual fibers 16 of an array 44 in the upper surface 41 u so that permeate is discharged in opposed directions through the bores 17 of the fibers.

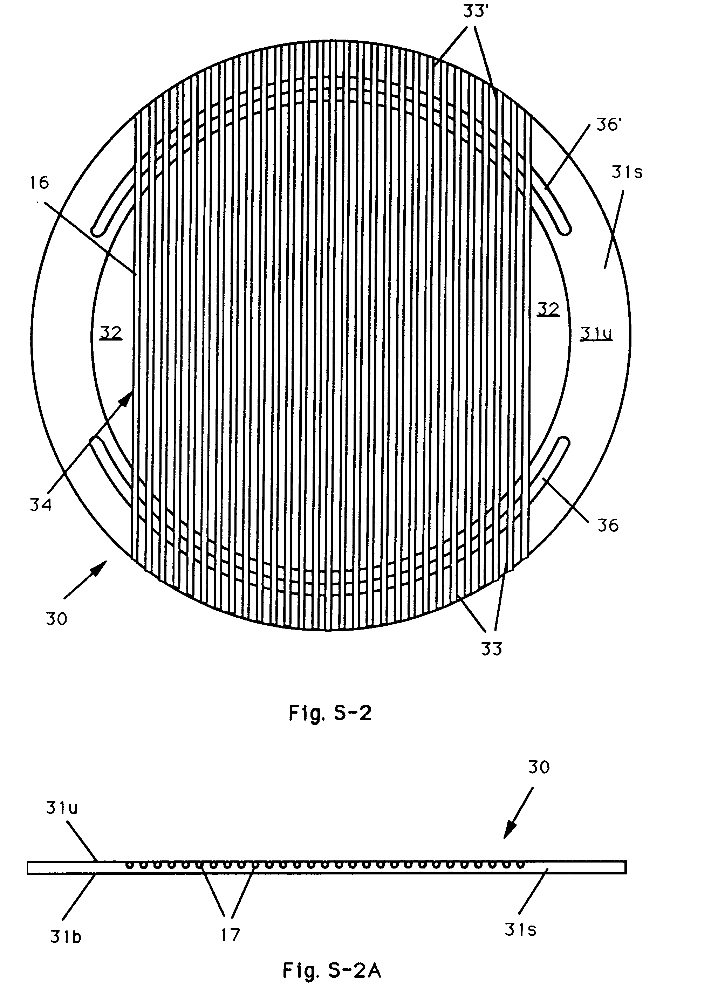

As in Figs 2A, S-2A and S-3A, the lower surface 41 b of the square ring 41 is ungrooved and the upper surfaces of the fibers 16 are substantially coplanar with the upper surface 41u.

Slots 46 and 46'are cut in opposite portions of the ring frame 41. The length of each slot is slightly greater than one-fourth the length of a side of a rectangle drawn with the longitudinal centerlines of the slots.

Referring to Figs 5 and S-5, there is shown a single cartridge 20 (without end-frame) during construction, specifically to illustrate how the arrays of successive wafers are staggered relative to one another so as to contact fluid flowing through the through-passage more efficiently. As indicated, the fibers are radially displaced relative to one another, but they could be laterally displaced in vertically spaced apart relationship, as shown in Fig 7.

As illustrated in Fig 6 in a portion of the front surface of the cartridge shown in Fig 5, in greatly enlarged detail, the grooves 33 have fibers 16 placed and held therein by adhesive 35, and the walls 18 of fibers are slightly compressed by the next succeeding ring without significantly restricting the inside diameter.

Referring to Fig S-8 there is schematically illustrated how a cartridge 150 is assembled by placing individual wafers 50, as illustrated in Fig S-4, one upon another, starting with the first wafer 50F and finishing with the last wafer 50L. Before post-potting the cartridge, it is clamped between a bottom end frame 57 and an uppermost end frame 53, both ungrooved (neither shown here, see Fig S-9).

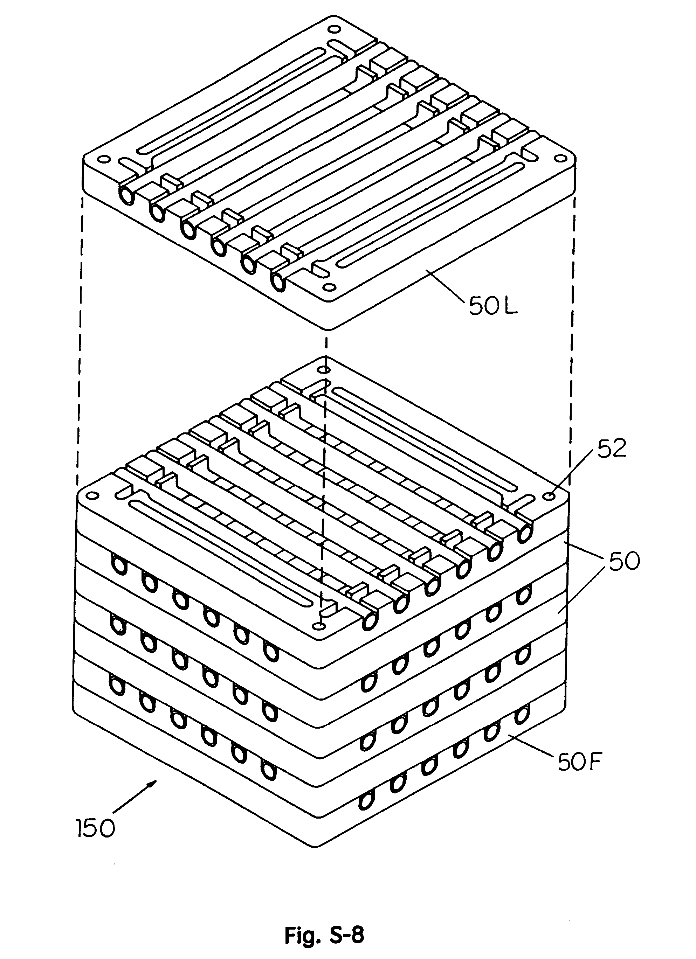

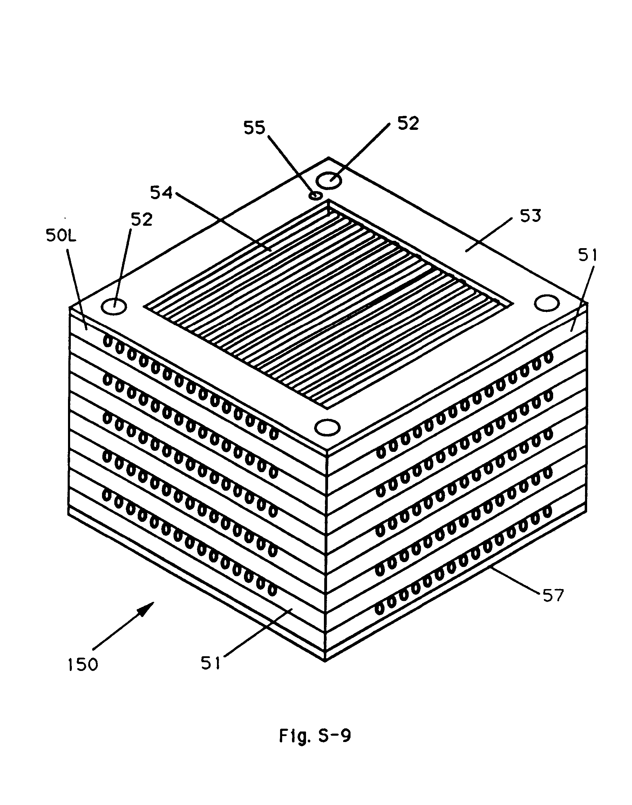

As illustrated in Fig S-9, after the last wafer 50L is placed on the assembly of wafers 50, it is sandwiched between uppermost and bottom end frames 53 and 57, (Fig 9) respectively, before inserting locating rods (not shown) through the tie-rod holes 52. The uppermost end frame 53 has a potting hole 55 in it, as does the bottom end frame 57 so that liquid resin can be flowed across all slots in the cartridge when its wafers are later post-potted. The cartridge 150 is then clamped with clamps (not shown) to provide a near-fluid-tight zone around the exposed fibers. The cartridge is then post-potted with a conventional potting resin (not shown) injected into potting hole 55 under low pressure sufficient to fill potting channels formed by successive slots in each wafer, using the upper and lower potting plates, respectively.

It is desirable to minimize the thickness of the frames 31 or 31S to minimize the vertical spacing between successive arrays, but practical considerations relating to injection molding, or otherwise forming the frame from a suitable resin, and weakening of the strength of the ring, dictate that the frame be at least about 50% thicker than the outside diameter of a fiber to be held therein. The materials for the frames of a wafer may be inorganic but are preferably either thermoplastic or thermosetting synthetic resinous materials, optionally reinforced with glass fibers, boron or graphite fibers and the like, if great strength is desired. Thermoplastic materials derived from a monoolefinically unsaturated monomer, are preferred for relatively low temperature service below 100°C, these being chosen so as to be sufficiently compatible with the material of the fibers to produce a lasting, fluid-tight bond. Such thermoplastic materials may be crystalline, such as polyolefins, particularly high density polyethylene, polyamides (nylon), polycarbonates and the like, semi-crystalline such as polyetherether ketone (PEEK), or substantially amorphous, such as poly(vinyl chloride) (PVC) and the like. Other useful commercially available materials are polypropylene, acrylonitrile-butadiene-styrene ("ABS"), polyacetal, polyesters and modified or blended polyphenylene oxide (PPO).

In a manner analogous to that described hereinabove it will now be evident that an elliptical, rectangular or other polygonal frame may be constructed and provided with an array.

Ungrooved rings having a thickness from about one-half (0.5) to about one and one-half (1.5) times the outside diameter of a fiber may be used with relatively little concern for their strength. In an embodiment of a cartridge, a portion of the front surface of which is illustrated in Fig 7 in greatly enlarged detail, the smoothly planar face of lowermost ring 41 is coated with a thick layer (about 1 mm - 3 mm) of adhesive 45 thicker than a fiber 16, and fibers are spaced apart and held until a successive (next lowermost) ring 41 is placed and pressed onto the adhesive which is then cured. More adhesive is then applied to the upper surface of ring 41, another array is held in place in the adhesive, and another ring 41 is pressed onto the upper surface of the adhesive in which the fibers are embedded. It is not narrowly critical how much pressure is applied so long as the effective internal cross-sections of the fibers are not significantly decreased.

In Figure 10 there is shown a module 60 in which is mounted a stack of rectangular cartridges 150. In a manner analogous to that described in Fig 1, the module is provided with a cylindrical shell 61, and flanges 66 and 67 on couplings 62 and 63, respectively, between which the stack is held. The inner diameter of the shell is preferably just larger than the diagonal of a cartridge but the inner surface 64 of the shell does not need to guide the cartridges into position. A gasket 68 provides a seal between the coupling 62 and the end of shell 61.

The cartridges are mounted by passing tie-rods 69 through passages in the corners of the cartridges. Threaded ends of the tie-rods project through stepped flange 65 which is secured in position with nuts 71. A screen 76 with a mesh interior 77 is provided at the feed end of the module to filter out large particles. Feed is introduced through coupling 62, concentrate leaves through coupling 63, and permeate leaves through outlet 72.

It will now be appreciated that another module, analogous to the one shown in Fig 10 (say), may be used as a mass transfer device to perform fluid-to-fluid transfer operations between any appropriately chosen first fluid flowing through the lumen of the fibers 16, and another appropriately chosen second fluid flowing through the stack externally to the fibers, provided the module is also fitted with an inlet (not shown) for the first fluid. The outlet for the first fluid is furnished by the permeate outlet 28 of the module. To force the first fluid to flow through the lumen of the fibers, appropriate fluid-tight seals are provided between the inside surface of the shell and the periphery of the stack of cartridges.

Preferred adhesives are U-V (ultraviolet) light curable resins such as Dymax 186m polyvinyl ethyl ethers, copolymers of acrylate ester with acrylic acid, epoxy resins and the like which form a fluid-tight bond between the fibers and the borders of the frames.

When each successive embedded array, positioned in a coated frame, is released before a succeeding frame is placed over it, the adhesive sets (or cures) in two stages. In the first stage the adhesive sets sufficiently to hold the array in place, but is not fully set (or fully cured). The adhesive bonds the succeeding frame to the array when the adhesive is fully set in the second stage.

When an array is placed over an uncoated frame which is then coated with adhesive in an amount sufficient to embed the fibers, and then covered with a succeeding frame before the fibers in the array are released, the adhesive may be fully cured in a single step.

The number of fibers in an array is arbitrary, typically being in the range from about 10 to about 1000. By way of illustration, if each wafer is 30 cm in diameter, 150 fibers each having an o.d. of 1.0 mm may be used in an array.

Numerous variations in arrangements of stacks, either in parallel or in series, may be contrived depending upon the particular material being treated, the efficiency or degree of separation sought, and the volume of fluid to be treated in a single module. In most applications, banks of modules are used, each containing a single stack of cartridges because the use of plural stacks in a module exposes it to a high risk of failure of seals between stacks.

It will now be evident that the apparatus and basic separation process of this invention may be used in the recovery and separation of a wide variety of commercially significant materials some of which, illustratively referred to, include (a) the recovery of water from brackish or sea water; (b) the recovery and concentration of salts, particularly those of ammonium, the alkali metal and alkaline earth metals such as the halides, sulfates, sulfites nitrates and hydroxides; and organic fluids including glycerine, lactic acid, alcohol, glycols and tanning extracts; (c) ion exchange processes; and, (d) separation of components which normally form azeotropes or have substantially the same boiling points, or ammonia from fluid organic amines; treatment of industrial waste streams such as radioactive waste, sulfite pulps, cannery waste, and the like.

In general any of the foregoing processes will benefit from method of using the module having the structural features described hereinabove. In those processes in which one component of a feedstream is to be separated from at least one other component therein, the feedstream is flowed over the hollow fibers in a direction essentially orthogonal to the plane in which the fibers lie; that portion of the feedstream which permeates the walls of the fibers into the permeate zone is collected and conducted away from the permeate zone; and, concentrate which does not permeate the walls and remains in the feed zone is flowed away from the feed zone and out of the module.

In the most preferred embodiment, the grooves are not dimensioned to provide a high degree of mechanical grip to avoid damaging polymeric membranes. A typical preferred method for constructing a cartridge of wafers from such frames comprises, (i) positioning a first frame to receive an array, (ii) applying enough of a viscous but fluid adhesive to coatthe grooves, (iii) placing an array of fibers in the grooves, one fiber to a groove while the fibers are held in spaced-apart relationship, (iv) applying additional adhesive to ensure that it fills the spaces between fibers and cover them, (v) positioning a second frame on the adhesive-coated fibers, and, (vi) waiting until the adhesive is cured sufficiently to secure the fibers in position before releasing their ends. After the last wafer is assembled to form a cartridge, they are held between top and bottom end frames and the cartridge is post-potted.

In another preferred embodiment, the grooves are dimensioned to provide a high degree of mechanical grip without damaging the fibers. Atypical preferred method for constructing a cartridge of wafers from such frames comprises, (i) positioning a first frame to receive an array, (ii) placing an array of fibers in the grooves, one fiber to a groove while the fibers are held in spaced-apart relationship, (iii) applying enough of a viscous but fluid adhesive to ensure that it fills the spaces between fibers and cover them, and, (iv) positioning a second frame on the adhesive-coated fibers before releasing the ends of the fibers. Though each fiber is gripped in a groove, enough adhesive is drawn around the fiber and into the groove to provide a fluid-tight seal between the fiber and the groove. The ends of the fibers can be released because they are held sufficiently well until the adhesive is essentially completely cured.

The viscosity of the adhesive is preferably in the range from about 10 cps to 1000 cps at room temperature.

In a variation of the above procedure, an ultraviolet (UV) light-curable resin is used as the adhesive, and the adhesive distributed over the fibers and first frame after the fibers are positioned over the frame. While still being held in the fiber-positioning clamps, a second frame is positioned over the adhesive-embedded fibers, and the resin then exposed to UV light to cure it. The fibers are then released from the clamps.

In a typical module, the end closures 22 and 23 are removably affixed to each end of the shell because the shell is meant to be reused when the cartridges are replaced. However, a disposable module may be constructed in which there is no intention to replace the cartridge(s) or save and reuse the shell. In such a case, the end closure 22 and 23 are fixedly, that is, non-removably secured to the ends of the shell.

The following specific examples are provided to illustrate the use of a module with a specific configuration and fiber packing density to illustrate the flux measured as liters/(meters)²(hr).

In each of the following examples a single cylindrical cartridge is used in a cylindrical module. Each example is run with a cartridge in a module which are each essentially identical to those used in the other. A permanent module was not available; the cartridge was mounted with temporary means; therefore dimensions of the module are not provided.

Each cartridge is constructed with 48 arrays. The angular displacement between successive wafers is 60°. The height of the cartridge is 108 mm and the membrane area 1.426 m².

Each circular wafer has the following specifications:

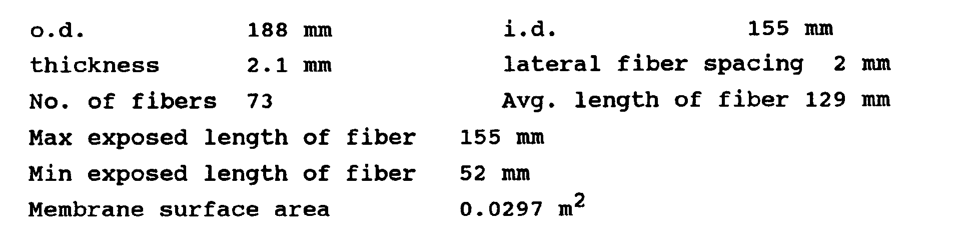

### Example 1

### Nanofiltration of surface water for potable water:

A nanofiltration membrane is typically used to filter surface water containing high concentrations of soluble naturally occurring organic matter such as humic and fulvic acids. These substances cause the water to appear brownish in color and upon chlorination in water treatment facilities, they react to form toxic trihalomethane compounds. These substances are reported to have a molecular weight in the range from 700 to 80,000 (see "Removal of Humic Substances From Natural Water by Reverse Osmosis" by Hallvard Odegaard and Suporn Kootetep, Water Research, vol 16, pp 613-620). To simulate such an application, the following test is conducted:

The above-specified cartridge is equipped with a "loose" nanofiltration membrane characterized by 25% NaCi rejection of a 1000 ppm feed solution at 75 psig. The feedwater is made up with reverse-osmosis water and synthetic humic acid such that the observed color level is 200 Pt-Co color units. A color unit is equivalent to 1 mg/L of Pt as chloroplatinate ion. This measurement technique is described in Standard Method for the Examination of Water and Waste-water (American Public Health Association, Washington, D.C., publisher).

The results are presented herebelow in tests made with a cartridge of this invention having membranes orthogonal (transverse) to the direction of flow of the feedstream, and the other module with the membranes parallel to the direction of flow in a cartridge having identical membrane specifications, but of conventional design.

The operating pressure is 75 psig and the feed flow rate is 30 gpm. Based on this flow rate the feedstream Reynolds number is 200 (based on the o.d. of the fiber). The rejection values are of color units and the flux is reported in US gal/ft²/24 hr (gfd). To convert to liters/m²/hr, multiply by 1.706.

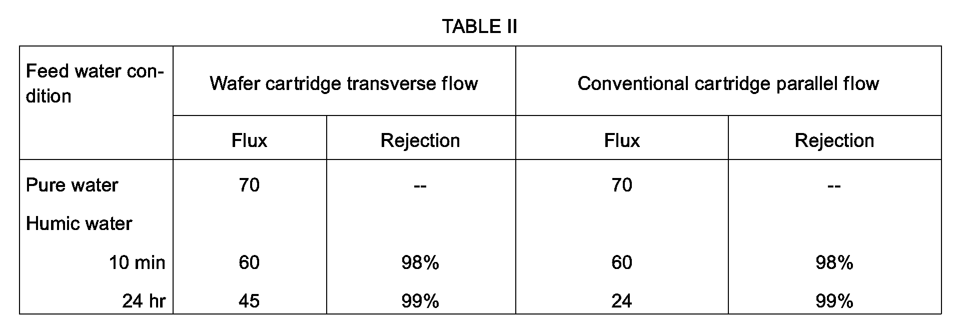

Significantly reduced fouling rates are observed in the transverse flow module compared to the conventional parallel flow module as indicated by the flux after 24 hr of continuous operation. The reduced fouling rate is attributable to the much higher rate of back diffusion possible when the fibers are oriented transverse to the feedstream.

### Example 2

### Microfiltration of Biological Sludge:

Typically conventional hollow fiber membrane modules and spiral wound modules are not used for this application because they become irreversibly fouled and clogged due to the high suspended solids concentrations. Tubular membranes may be used but are about 10 times more expensive to use per unit membrane surface area than the other modular forms.

The cartridge with the above specifications is constructed with a polymeric membrane having pore sizes in the range from 0.1 to 0.25 mf..l. The feedstream is an activated sludge with 15 g/L of suspended biological waste solids. The module is operated at a flow rate of 60 gpm and a pressure of 10 psi. The long term steady state flux is observed to be 50 gfd. The permeate is of consistently high quality with turbidity counts of less than 0.1 NTU (Nephelometric Turbidity Unit) indicating nearly 100% rejection of the suspended solids. NTU is a measure of the light scattered at an angle of 90° by particles in the water. It is an EPA-recognized measurement of water clarity.

The foregoing is evidence that the module in transverse flow has the ability to operate on feeds containing high suspended solids concentrations without significant fouling and no clogging of the flow passages over an extended period of time.

In each of the foregoing examples, the essential requirements are that the feedstream be flowed through at least one cartridge in which the fibers are disposed transverse to the direction of flow of the feedstream. The manner in which the successive wafers are made into a cartridge will depend in part upon the pressure at which the cartridge is to operate, the higher the pressure, the more pains taken to ensure a fluid-tight seal between fibers and frames in each successive array. Most preferred for relatively high pressure operation are grooved frames, and enough time is allowed between successive wafers to be sure that the bonding agent secures the fibers and frames on either side thereof, before releasing the fibers.

For lower pressure operation, ungrooved frames may be used and a viscous resin used to seal the fibers between adjacent frames. As stated earlier, the fibers may be released prior to the resin having cured, and a successive frame placed on the still-curing resin provided it is sufficiently compressible to result in a fluid-tight seal without damaging the fibers. By "sufficiently compressible" we mean that the successive frame may be pressed onto the still-curing resin with a pressure in the range from 1 psig to 50 psig depending upon the fragility or compressibility of the fibers.

## Claims

1. A tubular membrane module (10 or 60) comprising, a tubular shell (11 or 61) having first (22 or 62) and second (22 or 63) cylindrical ends with cylindrical internal surfaces, and a permeate outlet (28 or 72) adjacent one of said ends; first (26 or 66) and second (27 or 67) end fittings at opposite ends of the shell, each having internal cylindrical surfaces, said fittings having respective fluid passageways therethrough and being adapted to permit coupling of the module to external fluid inlet and outlet means; and, at least one cartridge (20 or 150) comprising plural repeating units or wafers (30 or 50) assembled one upon another and secured thereto, each repeating unit or wafer comprising an array (34 or44) of hollow fiber membranes or fibers (16); characterized in that said cartridge has
at least a first (50F) and a last (50L) wafer of said weafers (30 or 50), each wafer (30 or 50) comprising (i) said array (34) of individual, spaced apart, essentially linear hollow fibers (16) of selectively permeable material secured near their opposed terminal portions in a planar configuration, orthogonal to the longitudinal axis of said cartridge, without potting said terminal portions, and without being interconnected intermediate said terminal portions, each said array held non-displaceably by said terminal portions in
(ii) a unitary laminar frame (31, 31S or 41) having a continuous border periphery defining a through-passage (32 or 42) and said opposed terminal portions are secured in opposed portions of said border; an uppermost end-frame (53) bonded atop said last wafer and a bottom end-frame (57) bonded to the bottom of said first wafer,
so that a predetermined number "n" of arrays are sequentially secured in position and sandwiched between said bottom end-frame and said uppermost end frame to provide an axial through-passage in said cartridge, and,
"n" represents an integer which is numerically one less than the number of frames in which said arrays are held, and "n" is an integer greater than 2.

2. The module of claim 1 wherein said cartridge is disposed in said shell so that the peripheral surface of said cartridge is spaced apart from said shell's inner surface to provide a channel for fluid; the void fraction within said cartridge is in the range from about 0.3 to about 0.95; said hollow fibers have an outside diameter in the range from about 400wm to about 2 mm, and a wall thickness in the range from about 5% to 40% of said outside diameter, said frame has a thickness in the range from about 0.5 to about 5 times the outside diameter of said fibers, and said border is sufficiently wide to negate damage to terminal portions of said fibers when subjected to a drag force produced by a fluid stream flowing transversely over said fibers.

3. The module of claim 2 wherein said first and second cylindrical ends are removably affixed to said opposite ends of said shell, and said cartridge (20 or 150) is disposable.

4. The module of claim 2 wherein plural cartridges (20 or 150) are coaxially aligned and secured in fluid-tight relationship extending coaxially longitudinally within said shell (11 or 61).

5. The module of claim 4 wherein each said cartridge has a through-passage (47 or 52) in each said border of each said frame for mounting means for said cartridges.

6. A cartridge (20 or 150) for use in a tubular membrane module (10 or 60), an array (34 or 44) of hollow fiber membranes or fibers (16); characterized in that said cartridge has at least a first (50F) and a last (50L) repeating unit of plural repeating units (30 or 50), each repeating unit being a unitary wafer (30 or 50) comprising
(i) a unitary laminar frame (31, 31 S or 41) having a continuous border defining a through-passage (32 or 42) therewithin, and,
(ii) said array (34 or 44) comprises individual spaced apart essentially linear hollow fibers (16) of selectively permeable material secured near their opposed terminal portions in a planar configuration, orthogonal to the longitudinal axis of said cartridge, each said array held non-displaceably by said terminal portions in said border to form said wafer (30 or 50);
an uppermost end-frame (53) bonded atop said last repeating unit and a bottom end-frame (57) bonded to the bottom of said bottom end-frame, so that a predetermined number "n" of arrays are sequentially secured in position and sandwiched between said bottom end-frame and said uppermost end frame to provide an axial through-passage in said cartridge, and,
"n" represents an integer greater than 2 and is numerically one less than the number of frames in which said arrays are held.

7. The cartridge of claim 6 wherein,
(i) said through-passage within a multiplicity of said frames provides a fluid-tight axial conduit having open ends;
said fibers have an outside diameter in the range from about 100µm to about 10 mm, and a wall thickness in the range from about 5% to about 40% of said outside diameter, said bores are in open fluid communication outside said cartridge, said bores being disposed so as to duct fluid in opposite directions;
(ii) each of said opposed portions of said border has lateral grooves which provide a through-passage in the plane of the fibers, said grooves being adapted snugly to embrace terminal end portions of each fiber so that fibers of an array lie in parallel spaced-apart relationship in a plane substantially orthogonal to said axial conduit, and the fibers of one array lie transversely to those of another array;
(iii) each opposed portion of said border has a width sufficient to negate damage to terminal portions of said fibers when subjected to a drag force produced by a feedstream flowing axially within said through-passage;
(iv) the number of said grooves in each said opposed portion of said border are equal to the number of said fibers, each groove having an arcuate profile adapted to snugly embrace a corresponding arcuate portion of one of said fibers near one of its ends;
(v) said grooves in one of said opposed portions of said border are spaced apart with the same spacing as each groove in the other of said opposed portions of said border;
(vi) additionally, a bottom end frame placed beneath the first wafer formed, said uppermost end frame and bottom end frame each having a potting hole therein in open communication with said potting slots, and, said fibers are secured within said opposed portions of said border with
(vii) bonding means to bond said terminal portions of said fibers to said laminar frame in at least near-fluid-tight relationship.

8. The cartridge of claim 7 wherein said frame (31 s or 41) defines a functionally imperforate border within which said fibers are secured, to form said wafer.

9. The cartridge of claim 7 wherein said frame (31s s or 41 ) has opposed elongated potting slots (36, 36' and 46, 46') within opposed portions of said border, each of said slots has opposed end portions which, together with slots in successive frames form a potting channel traversing the longitudinal axial length of said cartridge; and each said frame is formed from a synthetic resinous stock.

10. The cartridge (20) of claim 7 wherein said terminal portions are disposed, each individually, in a multiplicity of chord-wise laterally spaced apart aligned grooves (33, 33' or 43,43') in opposed portions of said border and in the same plane, each groove adapted to embrace a terminal portion of one of said hollow fibers (16).

11. A method for forming a cartridge (20 or 150) for use in a tubular membrane module (10 or 60), said cartridge comprising plural repeating units or wafers (30 or 50) each wafer comprising a unitary laminar frame (31, 31s or 41) and an array (34 or 44) of hollow fibers (16), said method comprising,
(i) positioning a first frame (50F) having a continuous border which defines a central through-passage;
(ii) coating said border with an adhesive;
(iii) training all fibers in a first array in coplanar, parallel, spaced-apart relationship onto opposed portions of said border;
(iv) adhesively securing opposed terminal portions of said fibers in opposed portions of said border sufficiently to hold said terminal portions in position to form a wafer;
(v) positioning a second frame and securing it to said first frame with said first array held therebetween;
(vi) repeating steps (ii) to (v) with successive frames until a predetermined number of wafers have been sequentially secured in position, each bonded to the last prior wafer to secure plural arrays in a number of frames "n" which represents an integer greater than 2 and numerically one less than the number of frames in which said arrays are held; and,
(vii) capping the last-positioned wafer with an uppermost end frame to complete said cartridge which is non-disassemblable.

12. The method of claim 11 wherein each said wafer is set in fluid-tight relationship with the last prior wafer, within 5 minutes after securing said successive frames to form said cartridge.

13. The method of claim 12 wherein each of said successive frames is provided with elongated potting slots (36,36' and 46,46') in opposed portions of said border, each of said slots has opposed end portions which, together with slots in successive frames in open communication with each otherforming a potting channel traversing the longitudinal axial length of said cartridge;
additionally capping said first frame with a bottom end frame, said uppermost end frame and bottom end frame each having a potting hole (47 or 52) therein in open communication with said potting slots, so as to set each successive wafer in near-fluid tight relationship sufficient to confine potting resin flowed through said potting hole and slots which are in open communication with each other in contiguous frames, and, filling said channel with a curable resin to form, when cured, an annular zone of cured resin which post-pots said cartridge and ensures fluid-tight relationship of all said frames.
